# EUROPEAN PATENT APPLICATION

(11) **EP 2 806 391 A1**
(43) Date of publication of application: **26.11.2014**
(21) Application number: 13168877.2
(22) Date of filing: 23.05.2013
(51) Int. Cl.: G06Q 30/02, G06Q 50/00

(54) **A method for linking two people by a product intended to be sold.**

(71) Applicant: Borlenghi, Paolo, 20121 Milano (IT)
(72) Inventor: Borlenghi, Paolo, 20121 Milano (IT)
(74) Representative: Bonvicini, Davide

(57) **Abstract**

The present invention relates to a method for linking a first and a second person by means of a product (5) intended to be sold and associated to an access code (20) accessible only after purchasing said product (5). The method comprises the steps of accessing an insertion form (33), inserting a multimedia message (7) and an image (34), associating the image (34) to the multimedia message (7), associating the multimedia message (7) and/or the image (34) to a product (5), buying the product (5), accessing a web page (30), thus generating the opening of the multimedia message (7) through the access code (20).

## Description

The present invention relates to a method for linking two people by means of a product intended to be sold in accordance with the preamble of claim 1.

The difficulty is known of some people, usually shy people, to establish interpersonal relationships with other people. In particular, the greatest difficulty is found above all in the so-called "first approach" with a stranger.

The advent of the Internet and the social networks has partially solved the above-mentioned difficulties. In fact, by virtue of an indirect, non-physical interaction between people, first approaches with strangers increased, as well as the possibility to overcome initial inhibitions.

However, a still-unsolved problem arises in the case that a person wishes to contact another person frequenting a well-defined geographical area.

It frequently occurs to meet people, at the supermarket in one's own neighbourhood or, for example, in the preferred café outside one's building, whom one would like to know, without having the courage to approach them.

Therefore, the object of the present invention is to provide a method for linking two people by means of a product intended to be sold, having such functional characteristics as to meet the above-mentioned needs, while obviating the drawbacks mentioned above with reference to the prior art.

Such object is achieved by a method in accordance with claim 1.

Further characteristics and the advantages of the method according to the present invention will be apparent from the description set forth herein below of preferred implementation examples thereof, given by way of illustrative, non-limiting example, with reference to the appended Figures, in which:

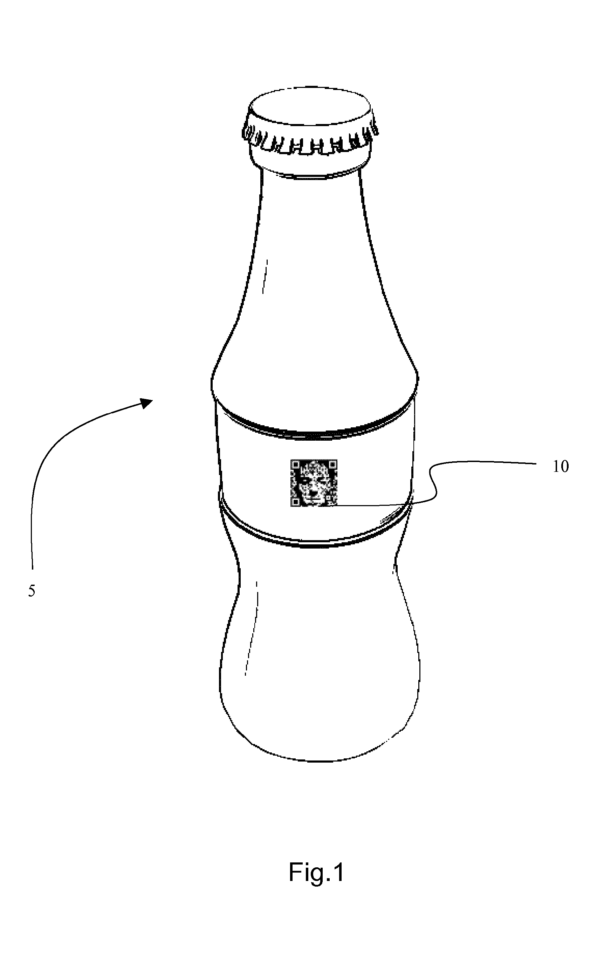

- Fig. 1 represents a perspective view of a product intended to be sold in a first configuration in which an image code is visible,
- Fig. 2 represents the product of Fig. 1 in a second configuration in which an access code is visible,

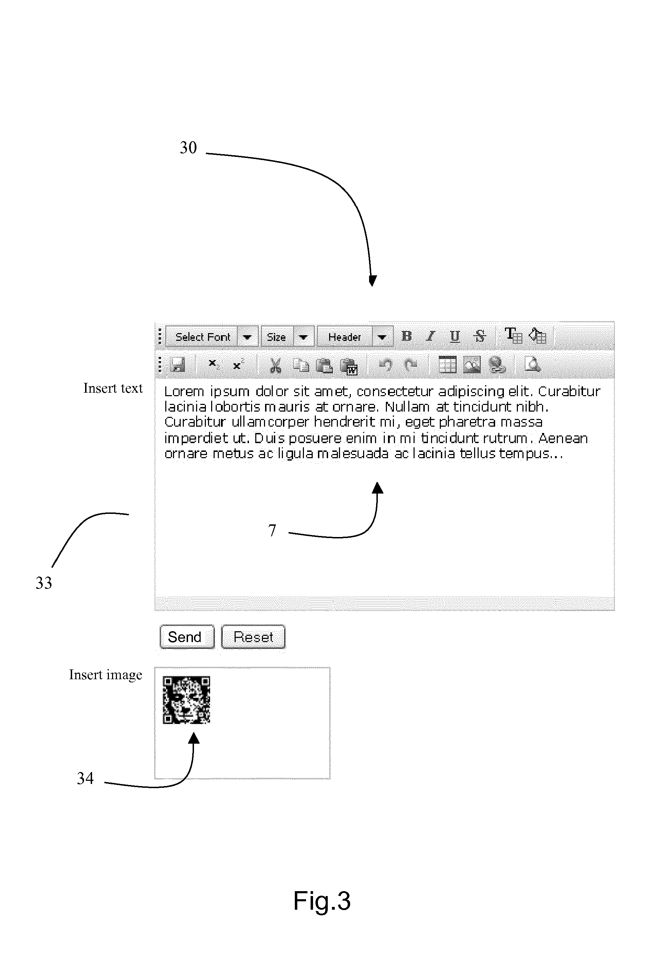

- Fig. 3 represents a view of a web page in accordance with the present invention. With reference to the appended Figures, a product intended to be sold and produced by a manufacturer is generally indicated with 5.

In the following of the present description and the following claims, the product 5 will be referred to according to the fact that:
- the product is intended to be sold or it has already been sold,
- the product is handled by a person after being sold.

First of all, it shall be pointed out that an access code 20 is associated to the product 5. In particular, the access code 20 is visible or accessible only after purchasing the product 5.

In this case, the product 5 may refer to any product that may be purchased in a standard shop. The product 5 is, in the non-limiting example shown, a small bottle containing a beverage, but it could be any other water bottle, a package for a cream, a shampoo, etc.

A first person who wish to establish an interpersonal relationship with a second person can associate a multimedia message to the product 5 so as to generate a kind of communication system with a possible addressee of said message.

In the practice, the product 5, being intended to be sold, will be someday purchased by a second person, who will be able to read the messages associated to said product. If the sender of the message, i.e., the first person, left contact information, he/she will be optionally be able to be contacted by the addressee who purchased the product 5, i.e., the second person.

It shall be noticed that the product may be a real product sold in the real or virtual (e-commerce) market, or a virtual product sold in an application/game online.

The method provides accessing an insertion form 33 of a web page 30 relating to the product 5.

In a version, the web page 30 associated to the product can be an application for a social network or for portable devices.

The web page 30 contains an insertion form 33. In such a manner, a first person who wish to establish a relationship with another person will be able to insert a multimedia message 7 and an image 34 in the insertion form 33.

The image 34 is then associated to the multimedia message 7.

Advantageously, the image 34 is the image of the first person, i.e. that person's face. However, the present invention also applies to the cases where the image 34 does not correspond to that of the first person.

Then the manufacturer of the product 5 associates the image 34 and/or the associated multimedia message 7 to a product 5.

Furthermore, the manufacturer processes the image 34 to generate an image code 10 and applies the image code 10 to the product 5.

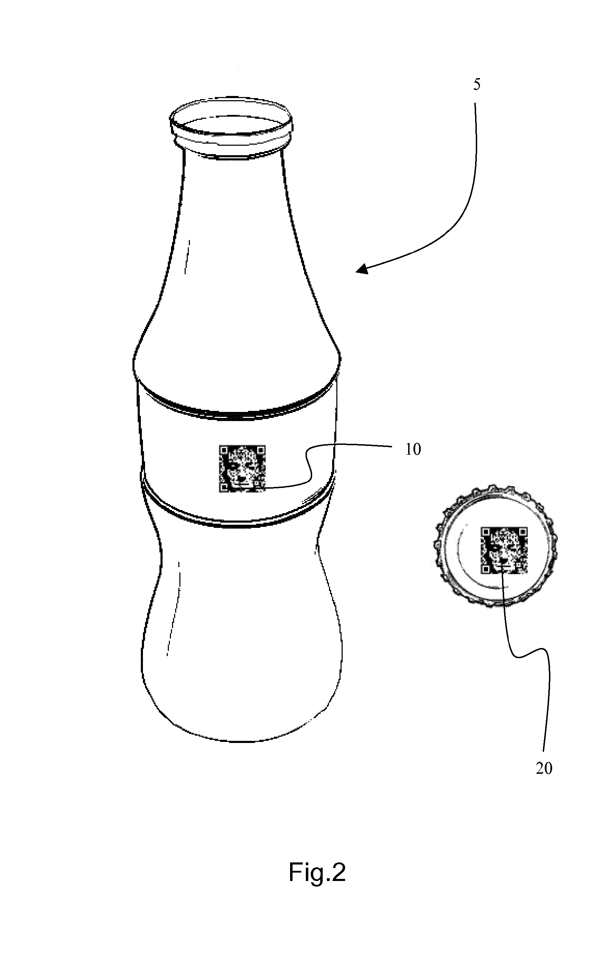

With reference to Fig. 2, the method provides for purchasing the product 5 by a second person who, only after purchasing the product 5, can read the access code 20. In particular, the product 5 may comprise protection means (not shown) capable of displaying the access code 20 only after purchasing it. For example, the protection means comprise a tamper-proof element that cannot be altered until when the product is the property of the purchaser.

However, it shall be pointed out that the product 5 may also be without any protection means. In such case, the access code 20 is located in an area accessible only after purchasing the product 5. For example, the access code 20 is located within the package of the product 5. In the example illustrated in Fig. 2, the access code is located within the plug of the small bottle containing the beverage.

In accordance with an embodiment, once the second person has purchased the product 5, the step of taking a picture of the access code 20 by a terminal is provided for.

The terminal is preferably a portable device. For example, the portable device may comprise a mobile phone, a smart phone, or a tablet, that is, a device with data sending and receiving capabilities, and provided with at least one camera. Subsequently, through the access code 20, it is possible to access the web page 30 relating to the product 5 so as to be able to display possible multimedia messages associated to said product 5. In particular, reading the access code provides for the generation of a hypertext link to a web page, for example, to the web page 30, in the terminal.

In this case, in the case that a person inputted a multimedia message 7 in the web page 30, the product purchaser is advantageously able to see the messages left by that person.

In a version, the purchaser of the product 5 has the possibility to share the received message in his/her own Facebook®, MySpace®, Twitter®, Linkedln®, Skype® page, or a page of similar social networks and/or programs through suitable links that are present in the web page 30.

In a version, the addressee of the message, once the access code 20 has been read, will be able to be put directly in communication by phone or chat with the sender of the message, if the latter inputted his/her own mobile phone number, or his/her own Facebook®, MySpace®, Twitter®, Linkedln®, Skype®, etc. profile details in the insertion form 33.

In fact, the method of the invention provides for arranging a general web page 15 accessible through a predetermined web address in which it is possible to insert a multimedia message and an image, in fact, making it possible for anyone to write and/or read the messages associated to a product 5 intended to be sold and/or already sold, respectively.

In accordance with an embodiment, the image code 10 is applied to the product 5 so as to be accessible before purchasing the product 5. In this manner, the image code 10 provides an indication of the presence of a multimedia message 7 associated to the product 5 and allows displaying the image code 10 of the first person. In this embodiment, the access code 20 is a token usable by the second person to open the multimedia message 7.

In particular, the image code 10 represents a sampled visualization of the image 34 of the first person, and it is applied externally to the product 5 so as to be visible before purchasing the same product 5.

In accordance with an alternative embodiment, the access code 20 corresponds to the image code 10. In this case, the access code 20, i.e., the image code 10, is applied on the product 5 so as to be accessible only after purchasing the product 5 and to be usable by the second person to open the multimedia message 7.

In particular, in this case, the access code 20 represents a sampled visualization of the image 34 of the first person, and it is applied to the product 5 so as to be visible only after purchasing the same product 5.

It shall be also pointed out that, by the present invention, it is possible to link two or more people belonging to a same geographical area (neighborhood, city, region) or belonging to antipodal geographical areas. The possibility of allowing a first person associating a message to a product and of allowing a second person reading said message, in fact, implements a modem "message in a bottle" system, that is, a communication system capable of potentially linking multiple people anywhere in the world.

As it shall be apparent from what has been described, the method according to the present invention allows meeting the needs and overcoming the drawbacks mentioned in the introductory part of the present description with reference to the prior art.

It shall be apparent that the embodiments and versions hereto described and illustrated are to be meant by way of illustrative example only, and those skilled in the art, in order to meet contingent, specific needs, will be able to make a number of modifications and variations to the method according to the invention described above, including, for example, the combination of said embodiments and versions, all of which anyhow fall within the protections cope of the invention as defined by the following claims.

## Claims

1. A method for linking a first and a second person by means of a product (5) intended to be sold and produced by a manufacturer, wherein said product (5) is associated to an access code (20), said access code (20) being accessible only after purchasing said product (5), said method comprising the steps of:
a1) accessing an insertion form (33) of a web page (30) relative to said product (5),
a2) inserting a multimedia message (7) in said insertion form (33),
a3) inserting an image (34) in said insertion form (33) and associating said image (34) to said multimedia message (7),
b1) associating said multimedia message (7) and/or said image (34) to a product (5),
b2) processing said image (34) to generate an image code (10) and applying said image code (10) to said product (5),
c1) buying said product (5),
c2) accessing said web page (30) for generating the opening of said multimedia message (7) through said access code (20),
wherein:
- said steps a1)-a3) are carried out by said first person, said steps b1) and b2) are carried out by the manufacturer of said product (5), and said steps c1) and c2) are carried out by said second person.

2. The method in accordance with claim 1, wherein:
- said image code (10) is applied, in said step b2), on said product (5) so as to be accessible before purchasing said product (5) so as to provide the indication of the presence of a multimedia message (7) associated to said product (5) and to display the image code (10) of the first person,
- said access code (20) is a token usable by said second person to open said multimedia message (7).

3. The method in accordance with claim 1 or 2, wherein said image code (10) represents a sampled visualization of said image (34), and it is applied externally on said product (5) so as to be visible before purchasing said product (5).

4. The method in accordance with claim 1, wherein:
- said access code (20) corresponds to said image code (10), said access code (20) being applied, in said step b2), on said product (5) so as to be accessible only after purchasing said product (5) and to be usable by said second person to open said multimedia message (7).

5. The method in accordance with claim 4, wherein said access code (20) represents a sampled visualization of said image (34), and it is applied to said product (5) so as to be visible only after purchasing said product (5).

6. The method in accordance with any of the claims 1 to 5, wherein said step c2) of accessing said web page (30), thus generating the opening of said multimedia message (7) through said access code (20) comprises the steps of:
- taking a picture of said access code (20) by a terminal,
- generating a hypertext link to said web page (30) in said terminal.

7. The method in accordance with any of the claims 1 to 6, wherein said step a1) of accessing an insertion form (33) comprises the step of inserting a text message, a video message, and/or a picture.

8. The method in accordance with any of the claims 1 to 7, wherein said step a2) of inserting at least one multimedia message (7) comprises the step of inserting a link to the personal page of a social network of the first person.

9. The method in accordance with any of the claims 1 to 8, wherein said image (34) is the face image of said first person.
